# EUROPEAN PATENT SPECIFICATION

(11) **EP 1 613 535 B1**
(45) Date of publication and mention of the grant of the patent: **03.01.2007**
(21) Application number: 04749637.7
(22) Date of filing: 01.04.2004
(51) Int. Cl.: B64D 45/00

(54) **AIR TRANSPORT SAFETY AND SECURITY SYSTEM**
LUFTTRANSPORTSICHERHEITS- UND SCHUTZSYSTEM
SYSTEME DE SURETE ET DE SECURITE POUR LE TRANSPORT AERIEN

(30) Priority: 14.04.2003 US 413128
(43) Date of publication of application: 11.01.2006
(73) Proprietor: Teledyne Technologies Incorporated, West Los Angeles, CA 90064-1021 (US)
(72) Inventor: STEENBERGE, Robert, W., Poway, CA 92064 (US); GLASSER, Jody, L., Rancho Palos Verdes, CA 90275 (US); NAHAPETIAN, Armen, Glendale, CA 91208 (US)
(74) Representative: Finnie, Peter John
(86) International application number: PCT/US2004/010065
(87) International publication number: WO 2004/092012

(56) References cited:
- WO-A-03/023322
- US-A1- 2002 035 415
- US-A1- 2003 060 941
- US-A1- 2003 065 428

## Description

### BACKGROUND

This application is related, generally, to an air transport safety and security system. Existing air-traffic control systems utilize ground-based radar to track the position of an aircraft. This positional information is recorded, thereby maintaining historical data associated with the flight of the aircraft. The positional information may also be supplemented with information such as the altitude of the aircraft and the unique identification number of the aircraft. If an air-traffic controller notices that the aircraft is exhibiting any unusual behavior, the controller may communicate with a pilot of the aircraft to obtain additional information. Although existing air-traffic control systems provide a glimpse of the progress of a particular flight, and have the capability of communicating with a pilot of the aircraft, the systems may be relatively ineffective in quickly identifying and determining the likely cause of any unusual behavior exhibited by an aircraft. In the event of a hijacking or terrorist takeover of the aircraft, or another similar emergency, communications between the air-traffic controller and a pilot of the aircraft may be blocked.

The avionics systems of many commercial aircraft include Data Management Systems that collect data related to a flight of the aircraft. Such information may include, for example, information related to an engine of the aircraft, a rudder of the aircraft, or a hydraulic system of the aircraft. After an aircraft has completed a flight, the information may be forwarded to an airline's operation center where the information is analyzed for use with ongoing safety and maintenance programs. Although such information may prove valuable in enhancing the safety of future flights, it does not contribute to the safety of the flight that it was collected from.

The avionics systems of many commercial aircraft may also contain air to ground wireless data links that can transmit selected reports from the Data Management System regarding in-flight performance for use by the airline. For example, if an engine in the aircraft exceeds certain limits, the Data Management System may automatically prepare a report that is sent to the ground by a VHF data link such as those operated by ARINC or SITA. Alternatively, the report could be transmitted via a satellite and then relayed to the ground. The report would then be routed to the airline. This air to ground communication capability provides a method to alert the airline when parameters established prior to the flight of the aircraft are exceeded.

US2002/0035415A and WO03/023322A describe a system and method for intervention control of an aircraft.

US2003/0065428A describes a system and method for recording data from an aircraft and alerting with a wireless network.

Neither the air traffic control system nor the avionics systems of commercial aircraft provide a method of producing early alerts if an aircraft begins to deviate from parameters that would be expected for a particular flight. For example, neither the air traffic control system nor the avionics systems of a commercial aircraft will quickly provide an alert when an aircraft suddenly changes heading away from a cleared flight path. The air traffic control system may note, after the fact, that an aircraft had moved away from its cleared path, but only after several scans by an air traffic control radar had acquired sufficient data to establish that a deviation existed.

With the systems currently available, it may be difficult to determine whether unusual behavior exhibited by an aircraft is due to an in-flight emergency such as a stuck rudder, a response to an alert such as one from a Traffic Alert Collision Avoidance System (TCAS), a hijacking or terrorist takeover of the aircraft, or another similar emergency.

### SUMMARY

According to a first aspect of the present invention, there is provided a safety and security system, comprising:
an aircraft subsystem including:
   a comparator module for comparing flight data with expected data; and
   a triggering module for triggering transmission of selected data when the flight data deviates from the expected data;
   a ground subsystem in communication with the aircraft subsystem unit via a wireless communication link, wherein the ground subsystem includes an analyzer module for analyzing the selected data transmitted from the aircraft; and
   an external system in communication with the ground subsystem via a second communication link, wherein one of the ground subsystem and the external system includes a correlation module for correlating the selected data transmitted from the aircraft with information accessible by the external system,
   characterised in that the correlation module is further configured to generate a warning when the correlating indicates a dangerous condition associated with the aircraft.

According to a second aspect of the present invention, there is provided a method for warning of a dangerous condition associated with an aircraft, the method including the steps of:
collecting flight data on board the aircraft;
comparing the flight data to expected data;
triggering transmission of selected data when the flight data deviate from the expected data;
analyzing the selected data transmitted from the aircraft; and
correlating the selected data with information accessible by an external system,
characterised by the step of generating a warning when the correlating indicates a dangerous condition associated with the aircraft.

### DESCRIPTION OF THE DRAWINGS

Figure 1 is a block diagram of one embodiment of an air transport safety and security system;
Figure 2 is a block diagram of one embodiment of the aircraft subsystem of Figure 1;
Figure 3 is a block diagram of one embodiment of the ground subsystem and the external system of Figure 1;
Figure 4 is a block diagram of another embodiment of the ground subsystem and the external system of Figure 1; and
Figure 5 illustrates one embodiment of a process flow through the air transport safety and security system of Figure 1.

### DETAILED DESCRIPTION OF THE INVENTION

It is to be understood that the figures and descriptions of the present invention have been simplified to illustrate elements that are relevant for a clear understanding of the present invention, while eliminating, for purposes of clarity, other elements. Those of ordinary skill in the art will recognize, however, that these and other elements may be desirable. However, because such elements are well known in the art, and because they do not facilitate a better understanding of the present invention, a discussion of such elements is not provided herein.

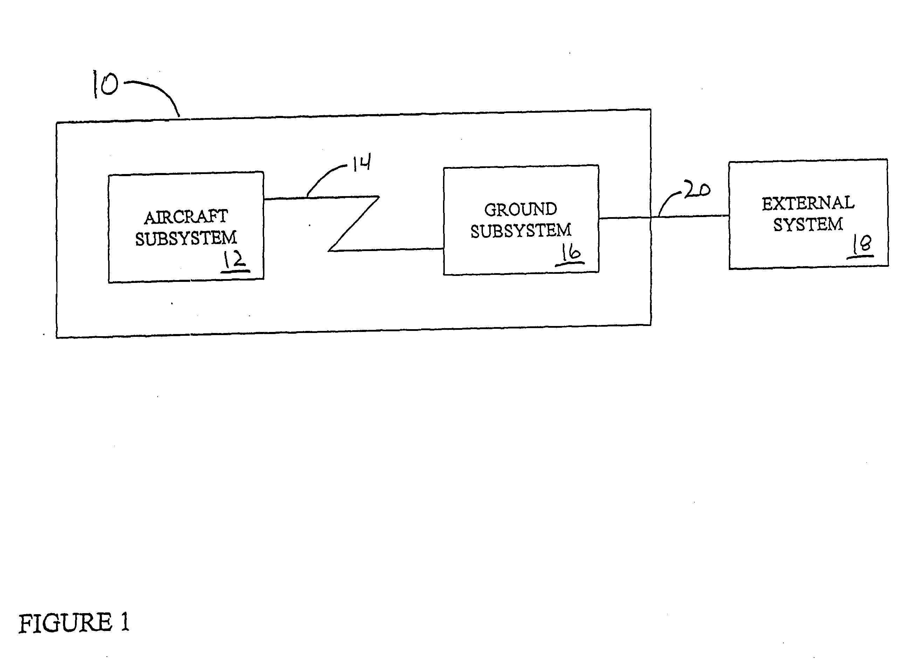

Figure 1 is a block diagram of one embodiment of an air transport safety and security system 10. The system 10 includes an aircraft subsystem 12 associated with an aircraft and a ground subsystem 16 in communication with the aircraft subsystem 12 via a wireless communication link 14. The wireless communication link 14 may be embodied as, for example, a VHF communication link, an HF communication link, or a satellite communication link. The aircraft subsystem 12 is configured to detect anomalies that may affect the safety and security of the aircraft, and automatically transmit selected data to the ground subsystem 16 when an anomaly is detected. The selected data may be different from or in addition to flight data associated with the anomaly.

The ground subsystem 16 is configured to receive and analyze the selected data transmitted from the aircraft. The ground subsystem 16 is also in communication with an external system 18 via a communication link 20. The communication link 20 may be, for example, a portion of a computer network such as, for example, a Local Area Network (LAN), a Metropolitan Area Network (MAN), or a Wide Area Network (WAN). According to one embodiment, the ground subsystem 16 may also be configured to correlate the selected data transmitted from the aircraft with information received from the external system 18.

The external system 18 may be, for example, a civilian or military air traffic control system, a military air defense system, or a military command and control system. According to one embodiment, the external system 18 may be configured to correlate the selected data transmitted from the aircraft with information accessible by the external system 18, and such information may be resident on the external system 18.

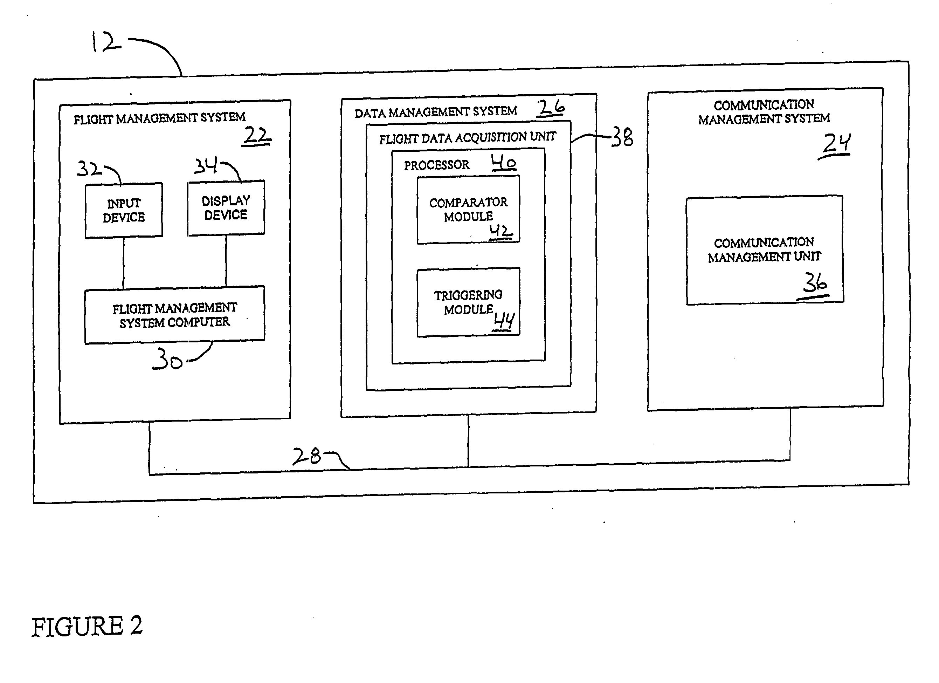

Figure 2 is a block diagram of one embodiment of the aircraft subsystem 12 of Figure 1. The aircraft subsystem 12 includes a Flight Management System (FMS) 22, a Communication Management System (CMS) 24, and a Data Management System (DMS) 26. The FMS 22, the CMS 24, and the DMS 26 are in communication with each other via communication link 28 which may be, for example, an Aeronautical Radio, Inc. (ARINC) 429 bus.

The FMS 22 may manage functions associated with the flying of the aircraft such as, for example, flight planning and aircraft guidance. The FMS 22 may include a Flight Management System Computer (FMSC) 30, an input device 32 connected to the FMSC 30, and a display device 34 connected to the FMSC 30. The input device 32 may be used to load navigation information into the FMSC 30. Such information may include, for example, the latitude and longitude of various waypoints, airports, and navigational aids associated with the flight plan. The FMSC 30 may process the navigation information and forward the navigation information to the display device 34. The display device 34 may provide a visual indication of the various waypoints and airports, and the distances and headings between the waypoints, airports and navigational aids. During a flight, the FMSC 30 may receive flight data information from the DMS 26, process the flight data information, and forward the flight data information to the display device 34 for real-time display.

The CMS 24 may manage communications between the aircraft and the ground subsystem 16 of the air transport safety and security system 10. The CMS 24 may include a Communications Management Unit (CMU) 36 or, in lieu of the CMU 36, an Aircraft Communications Addressing and Reporting System (ACARS) Management Unit.

The DMS 26 may manage data associated with the operation of the aircraft, and may receive information from various discrete, analog, and bus inputs such as, for example, ARINC 429 bus inputs. The information received by the DMS 26 may include, for example, information from a radio altimeter, a ground proximity system, a global positioning system, a flight controls system, an engine control system, and other electrical systems associated with the aircraft.

The DMS 26 may include a Digital Flight Data Acquisition Unit (DFDAU) 38. The DFDAU 38 may process the information received by the DMS 26, and may forward the processed information to the FMS 22 and the CMS 24. For example, the DFDAU 38 may forward the processed information to a Cockpit Voice Recorder, a Flight Data Recorder, a Quick Access Recorder, an ARINC -615 Data Loader, an ARINC-739A Multi-Function Control Display Unit (MCDU), an ARINC -740/744 Cockpit Printer, and a Quick Access Recorder.

The DFDAU 38 may include a processor 40 which may be, for example, a central processing unit (CPU) including, e.g., a microprocessor, an application specific integrated circuit (ASIC), or one or more printed circuit boards. The processor 40 may include a comparator module 42 for comparing flight data with expected data, and a triggering module 44 for triggering transmission of selected data when the flight data deviates from the expected data. By comparing the flight data with expected data, the comparator module 42 may serve to identify anomalies that may affect the safety and security of the aircraft. Such anomalies may include, for example, information indicating that the aircraft is flying at non-approved altitude or heading, that the aircraft is exhibiting a high rate of descent, or that the flight path of the aircraft is deviating from the flight plan. According to one embodiment, the triggering module 44 may generate a message instructing the CMS 24 to transmit the selected data to the ground subsystem 16 of the air transport safety and security system 10 when the comparator module 42 identifies an anomaly that may affect the safety and security of the aircraft. As described hereinabove, the selected data may be different from or in addition to flight data associated with the anomaly.

The comparator module 42 and the triggering module 44 may be implemented as microcode configured into the logic of the processor 40, or may be implemented as programmable microcode stored in electrically erasable programmable read only memories (EEPROMs). According to another embodiment, the modules 42, 44 may be implemented as software code to be executed by the processor 40. The software code may be written in any suitable programming language using any suitable programming technique. For example, the software code may be written in C using procedural programming techniques, or in Java or C++ using object oriented programming techniques. The software code may be stored as a series of instructions or commands on a computer readable medium, such as a random access memory (RAM) or a read only memory (ROM), a magnetic medium such as a hard disk or a floppy disk, or an optical medium such as a CD-ROM.

Although this embodiment describes the comparator module 42 and triggering module 44 as residing within the aircraft subsystem 12 at the DFDAU 38, it is understood that in other embodiments at least one of the modules 42, 44 may reside elsewhere within the aircraft subsystem 12. For example, according to one embodiment, at least one of the modules 42, 44 may reside within the DMS 26 at a location other than at the DFDAU 38. According to another embodiment, at least one of the modules 42, 44 may reside within the FMS 22. According to another embodiment, at least one of the modules 42, 44 may reside within the CMS 24. According to another embodiment, the modules 42,44 may reside at different locations within the aircraft subsystem 12. In addition, according to another embodiment, at least one of the modules 42, 44 may reside within a different aircraft subsystem which is in communication with the aircraft subsystem 12.

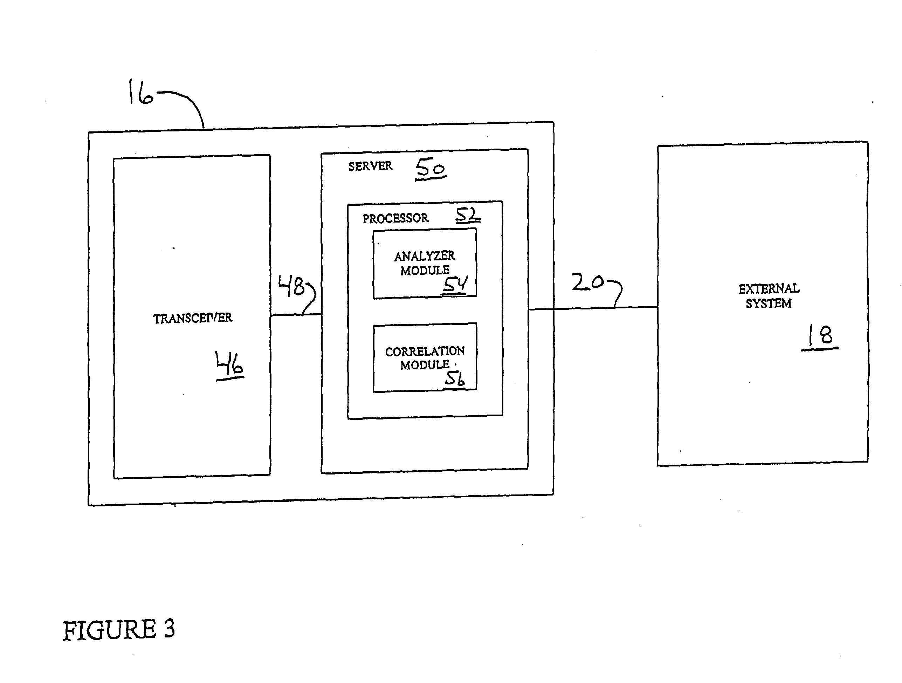

Figure 3 is a block diagram of one embodiment of the ground subsystem 16 and the external system 18 of Figure 1. The ground subsystem 16 includes a transceiver 46, a communication link 48, and a server 50 in communication with the transceiver 46 via the communication link 48. The transceiver 46 may receive selected data transmitted from the CMS 24, and forward the information to the server 50 via the communication link 48. According to one embodiment, the transceiver 46 may be embodied as a portion of an air to ground communication system such as, for example, the ARINC network or the SITA network. According to another embodiment, the transceiver 46 may be embodied as a portion of a cellular base station, as a portion of a Personal Communications Service (PCS) base station, or as a portion of a satellite communications earth station. The communication link 48 may comprise a portion of the Public Switched Telephone Network (PSTN).

The server 50 may include a processor 52 which may be, for example, a central processing unit (CPU) including, e.g., a microprocessor, an application specific integrated circuit (ASIC), or one or more printed circuit boards. The processor 52 includes an analyzer module 54 for analyzing the selected data transmitted by the CMS 24, and a correlation module 56 for correlating the selected data with information received from the external system 18. The analyzer module 54 may generate a message indicating that the analysis of the selected data does not indicate a dangerous condition associated with the aircraft. The correlation module 56 also generates a warning when the correlation of the selected data with information received from the external system 18 indicates a dangerous condition associated with the aircraft. The modules 54, 56 may be implemented as microcode configured into the logic of the processor 52, or may be implemented as programmable microcode stored in electrically erasable programmable read only memories (EEPROMs). According to another embodiment, the modules 54, 56 may be implemented as software code to be executed by the processor 52. The software code may be written in any suitable programming language using any suitable programming technique. For example, the software code may be written in C using procedural programming techniques, or in Java or C++ using object oriented programming techniques. The software code may be stored as a series of instructions or commands on a computer readable medium, such as a random access memory (RAM) or a read only memory (ROM), a magnetic medium such as a hard disk or a floppy disk, or an optical medium such as a CD-ROM.

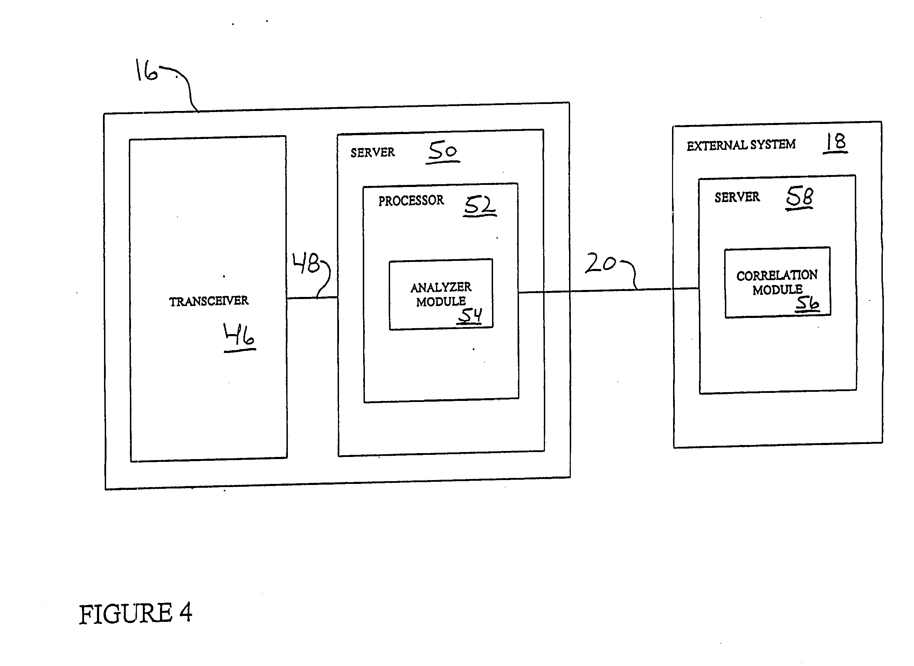

Figure 4 is a block diagram of another embodiment of the ground subsystem 16 and the external system 18 of Figure 1. The ground subsystem 16 of Figure 4 is similar to the ground subsystem 16 of Figure 3, but does not include the correlation module 56. As shown in Figure 4, the external system 18 includes a server 58 similar to the server 50 described hereinabove with respect to Figure 3. The server 58 is in communication with the ground subsystem 16 via the communication link 20, and includes the correlation module 56. Thus, according to this embodiment, the correlation of the selected data with information accessible by the external system 18 occurs at the external system 18.

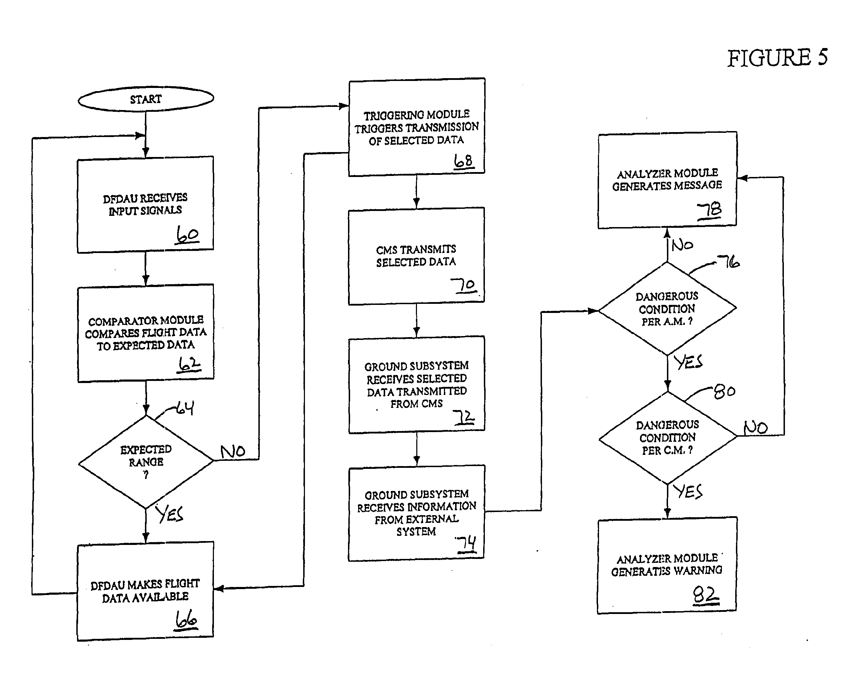

Figure 5 illustrates one embodiment of a process flow through the air transport safety and security system 10 of Figure 1. The process begins at block 60, where the DFDAU 38 receives input signals from various discrete, analog, and bus inputs. Collectively, the input signals comprise flight data. From block 60, the process advances to block 62, where the comparator module 42 compares the flight data to expected data. For each input signal, the comparator module 42 compares a value associated with the input signal with an expected value for that particular input signal. The expected value for each input signal may be stored in a memory of the DFDAU 38, and the expected value may be represented by a range of values. From block 62, the process advances to block 64, where the comparator module 42 determines whether the value associated with each input signal is within the range of expected values. The comparator module 42 may make this determination by comparing the values associated with the respective input signals with the expected values, or range of values.

If the values associated with the input signals are within the expected range for each input signal, the process advances from block 64 to block 66, where the DFDAU 38 makes the flight data available to other components on board the aircraft. From block 66, the process returns to block 60, where the process advances as described hereinabove.

If the values associated with the input signals are not within the expected range for each input signal, the process advances from block 64 to block 68, where the triggering module 44 triggers the transmission of selected data. The selected data may be different from or in addition to the flight data. The triggering module 44 may trigger such a transmission by generating an instruction to the CMS 24 to transmit the selected data to the ground subsystem 16 of the air transport safety and security system 10. From block 68, the process returns to block 66, where the process advances as described hereinabove, and to block 70, where the CMS 24 receives the instruction generated by the triggering module 44, and transmits the selected data. The CMS 24 may transmit the selected data from the aircraft to a base station associated with the ground subsystem 16, or may transmit the selected data from the aircraft to a satellite. The satellite may then relay the selected data to an earth station associated with the ground subsystem 16.

From block 70, the process advances to block 72, where the ground subsystem 16 receives the selected data transmitted from the aircraft. From block 72, the process advances to block 74, where the ground subsystem 16 receives information from the external system 18. Such information may include, for example, authorization from an air-traffic controller for the aircraft to fly at an altitude or heading that deviates from the flight plan. From block 74, the process advances to block 76, where the analyzer module 54 analyzes the selected data to determine whether the selected data indicate a dangerous condition. Examples of dangerous conditions include the aircraft flying at non-approved altitude or heading, the aircraft exhibiting a high rate of descent, or the flight path of the aircraft deviating from the flight plan.

If the analyzer module 54 determines that the selected data do not indicate a dangerous condition, the process advances from block 76 to block 78, where the analyzer module 54 generates a message indicating that the selected data do not indicate a dangerous condition. If the analyzer module 54 determines that the selected data do indicate a dangerous condition, the process advances from block 76 to block 80, where the correlation module 56 correlates the selected data with information received from the external system 18. If the correlation of the selected data with the information received from the external system does not indicate the presence of a dangerous condition, the process advances from block 80 to block 78, where the analyzer module 54 generates a message indicating that the selected data do not indicate a dangerous condition. If the correlation of the selected data with the information received from the external system 18 indicates the presence of a dangerous condition, the process advances from block 80 to block 82, where the analyzer module 54 generates a warning. The warning may be in the form of, for example, an audible alarm, a warning displayed on a monitor, a warning printed on paper, or any combination thereof. The flow process described with respect to Figure 5 may occur on a continuous basis while the aircraft is in flight.

Although the invention has been described and illustrated in detail, it is clearly understood that the same is by way of illustration and example and is not to be taken by way of limitation. It will be appreciated by those of ordinary skill in the art that modifications and variations of the embodiments presented herein may be implemented without departing from the scope of the invention defined in the appended claims. For example, the comparator module 42 and the triggering module 44 may be implemented as a single module. Similarly, the analyzer module 54 and the correlation module 56 may be implemented as a single module. In addition, the selected data may be forwarded to data consumers such as the Department of Defense, the Federal Communications Commission, the Federal Aviation Administration, etc., and the selected data may be correlated with information accessible by the external system 18 at locations other than those described hereinabove.

## Claims

1. A safety and security system (10), comprising:
an aircraft subsystem (12) including:
a comparator module (42) for comparing flight data with expected data; and
a triggering module (44) for triggering transmission of selected data when the flight data deviates from the expected data;
a ground subsystem (16) in communication with the aircraft subsystem unit via a wireless communication link (14), wherein the ground subsystem includes an analyzer module (54) for analyzing the selected data transmitted from the aircraft; and
an external system (18) in communication with the ground subsystem via a second communication link (20), wherein one of the ground subsystem and the external system includes a correlation module (56) for correlating the selected data transmitted from the aircraft with information accessible by the external system,
**characterised in that** the correlation module (56) is further configured to generate a warning when the correlating indicates a dangerous condition associated with the aircraft.

2. The system (10) of claim 1, wherein the aircraft subsystem (12) includes:
a flight management system (22);
a data management system (26) in communication with the flight management system; and
a communication management system (24) in communication with the data management system, wherein the communication management system is for transmitting the selected data.

3. The system (10) of claim 2, wherein at least one of the comparator module (42) and the triggering module (44) reside within the flight management system (22).

4. The system (10) of claim 2, wherein at least one of the comparator module (42) and the triggering module (44) reside within the data management system (26).

5. The system (10) of claim 2, wherein the data management system (26) includes a flight data acquisition unit (38), and wherein at least one of the comparator module (42) and the triggering module (44) reside within the flight data acquisition unit.

6. The system (10) of claim 2, wherein at least one of the comparator module (42) and the triggering module (44) reside within the communication management system (24).

7. The system (10) of claim 2, wherein the communication management system (24) includes a communication management unit (36) for transmitting the selected data.

8. The system (10) of claim 2, wherein the communication management system(24) includes an aircraft communications addressing and reporting system for transmitting the selected data.

9. The system (10) of claim 1, wherein the wireless communication link (14) includes one of a VHF communication link, a HF communication link, and a satellite communications link.

10. The system (10) of claim 1, wherein the ground subsystem includes:
a transceiver(46); and
a server (50) in communication with the transceiver via a third communication link (48), wherein the server includes the analyzer module (54).

11. The system (10) of claim 10, wherein the serverfurther includes the correlation module (56).

12. The system (10) of claim 10, wherein the transceiver (46) comprises a portion of a base station.

13. The system (10) of claim 10, wherein the transceiver (46) comprises a portion of an earth station.

14. The system (10) of claim 10, wherein the third communication link (48) comprises a portion of the Public Switched Telephone Network.

15. The system (10) of claim 1, wherein the external system (18) is one of a civilian air traffic control system, a military air traffic control system, a military air defense system, and a military command and control system.

16. The system (10) of claim 1, wherein the external system (18) includes a server (58) in communication with the ground subsystem (16) via the second communication link (20), and wherein the server includes the correlation module (56).

17. The system (10) of claim 16, wherein the second communication link (20) comprises a portion of a computer network.

18. A method for warning of a dangerous condition associated with an aircraft, the method including the steps of:
collecting flight data on board the aircraft;
comparing the flight data to expected data;
triggering transmission of selected data when the flight data deviate from the expected data;
analyzing the selected data transmitted from the aircraft; and
correlating the selected data with information accessible by an external system,
**characterised by** the step of generating a warning when the correlating indicates a dangerous condition associated with the aircraft.

19. The method of claim 18, wherein correlating the selected data includes correlating the selected data with information received from the external system.

20. The method of claim 18, wherein correlating the selected data includes correlating the selected data with information resident on the external system.

## Patentansprüche

1. Sicherheits- und Schutzsystem (10), umfassend:
ein Flugzeugsubsystem (12), welches beinhaltet:
ein Komparatormodul (42) zum Vergleichen von Flugdaten mit erwarteten Daten; und
ein Auslösemodul (44) zum Auslösen einer Übertragung von ausgewählten Daten, wenn die Flugdaten von den erwarteten Daten abweichen;
ein Bodensubsystem (16), welches über eine drahtlose Kommunikationsverbindung (14) in Verbindung mit der Flugzeugsubsystemeinheit ist, wobei das Bodensubsystem ein Analysatormodul (54) beinhaltet, um die von dem Flugzeug übertragenen ausgewählten Daten zu analysieren; und
ein externes System (18), welches über eine zweite Kommunikationsverbindung (20) in Verbindung mit dem Bodensubsystem ist, wobei eines von dem Bodensubsystem und dem externen System ein Korrelationsmodul (56) beinhaltet, um die von dem Flugzeug übertragenen ausgewählten Daten mit durch das externe System zugänglichen Informationen zu vergleichen,
**dadurch gekennzeichnet, dass** das Korrelationsmodul (56) darüber hinaus dazu ausgestaltet ist, eine Warnung zu erzeugen, wenn die Korrelation einen mit dem Flugzeug verbundenen gefährlichen Zustand anzeigt.

2. System (10) nach Anspruch 1, wobei das Flugzeugsubsystem (12) beinhaltet:
ein Flugmanagementsystem (22);
ein Datenmanagementsystem (26), welches in Verbindung mit dem Flugmanagementsystem ist; und
ein Kommunikationsmanagementsystem (24), welches in Verbindung mit dem Datenmanagementsystem ist, wobei das Kommunikationsmanagementsystem zur Übertragung der ausgewählten Daten ist.

3. System (10) nach Anspruch 2, wobei wenigsten eines von dem Komparatormodul (42) und dem Auslösemodul (44) sich innerhalb des Flugmanagementsystems (22) befindet.

4. System (10) nach Anspruch 2, wobei wenigstens eines von dem Komparatormodul (42) und dem Auslösemodul (44) sich innerhalb des Datenmanagementsystems (26) befindet.

5. System (10) nach Anspruch 2, wobei das Datenmanagementsystem (26) eine Flugdatenerfassungseinheit (38) beinhaltet, und wobei wenigstens eines von dem Komparatormodul (42) und dem Auslösemodul (44) sich innerhalb der Flugdatenerfassungseinheit befindet.

6. System (10) nach Anspruch 2, wobei wenigstens eines von dem Komparatormodul (42) und dem Auslösemodul (44) sich innerhalb des Kommunikationsmanagementsystems (24) befindet.

7. System (10) nach Anspruch 2, wobei das Kommunikationsmanagementsystem (24) eine Kommunikationsmanagementeinheit (36) zum Übertragen der ausgewählten Daten beinhaltet.

8. System (10) nach Anspruch 2, wobei das Kommunikationsmanagementsystem (24) ein Aircraft-Communications-Addressing-And-Reporting-System zum Übertragen der ausgewählten Daten beinhaltet.

9. System (10) nach Anspruch 1, wobei die drahtlose Kommunikationsverbindung (14) eines von einer VHF-Kommunikationsverbindung, einer HF-Kommunikationsverbindung und einer Satellitenkommunikationsverbindung beinhaltet.

10. System (10) nach Anspruch 1, wobei das Bodensubsystem beinhaltet:
eine Sende- und Empfangsvorrichtung (46); und
einen Server (50), welcher über eine dritte Kommunikationsverbindung (48) in Verbindung mit der Sende- und Empfangsvorrichtung ist, wobei der Server das Analysatormodul (54) beinhaltet.

11. System (10) nach Anspruch 10, wobei der Server darüber hinaus das Korrelationsmodul (56) beinhaltet.

12. System (10) nach Anspruch 10, wobei die Sende- und Empfangsvorrichtung (46) einen Teil einer Basisstation beinhaltet.

13. System (10) nach Anspruch 10, wobei die Sende- und Empfangsvorrichtung (46) einen Teil einer Bodenstation umfasst.

14. System (10) nach Anspruch 10, wobei die dritte Kommunikationsverbindung (48) einen Teil des öffentlichen Telefonnetzes umfasst.

15. System (10) nach Anspruch 1, wobei das externe System (18) eines von einem zivilen Luftverkehrskontrollsystem, einem militärischen Luftverkehrskontrollsystem, einem militärischen Luftverteidigungssystem und einem militärischen Befehls- und Kontrollsystem ist.

16. System (10) nach Anspruch 1, wobei das externe System (18) einen Server (58) beinhaltet, welcher über die zweite Kommunikationsverbindung (20) in Verbindung mit dem Bodensubsystem (16) ist, und wobei der Server das Korrelationsmodul (56) beinhaltet.

17. System (10) nach Anspruch 16, wobei die zweite Kommunikationsverbindung (20) einen Teil eines Computernetzwerks umfasst.

18. Verfahren zur Warnung vor einem mit einem Flugzeug verbundenen gefährlichen Zustand, wobei das Verfahren die Schritte beinhaltet:
Sammeln von Flugdaten an Bord des Flugzeugs;
Vergleichen der Flugdaten mit erwarteten Daten;
Auslösen einer Übertragung von ausgewählten Daten, wenn die Flugdaten von den erwarteten Daten abweichen;
Analysieren der von dem Flugzeug übertragenen ausgewählten Daten; und
Korrelation der ausgewählten Daten mit durch ein externes System zugänglichen Informationen,
**gekennzeichnet durch** den Schritt eines Erzeugens einer Warnung, wenn die Korrelation einen mit dem Flugzeug verbundenen gefährlichen Zustand anzeigt.

19. Verfahren nach Anspruch 18, wobei die Korrelation der ausgewählten Daten eine Korrelation der ausgewählten Daten mit von dem externen System empfangenen Informationen beinhaltet.

20. Verfahren nach Anspruch 18, wobei die Korrelation der ausgewählten Daten eine Korrelation der ausgewählten Daten mit auf dem externen System abgespeicherten Informationen beinhaltet.

## Revendications

1. Système de sûreté et de sécurité (10), comprenant :
un sous-système d'avion (12) comprenant :
un module de comparateur (42) pour comparer des données de vol à des données prévues ; et
un module de déclenchement (44) pour déclencher la transmission de données sélectionnées lorsque les données de vol s'écartent des données prévues ;
un sous-système au sol (16) en communication avec l'unité de sous-système d'avion par l'intermédiaire d'une liaison de communication sans fil (14), dans lequel le sous-système au sol comprend un module d'analyseur (54) pour analyser les données sélectionnées transmises de l'avion ; et
un système externe (18) en communication avec le sous-système au sol par l'intermédiaire d'une deuxième liaison de communication (20), dans lequel l'un du sous-système au sol et du sous-système externe comprend un module de corrélation (56) pour corréler les données sélectionnées transmises de l'avion avec les informations accessibles par le système externe,
**caractérisé en ce que** le module de corrélation (56) est en outre configuré pour générer un avertissement lorsque la corrélation indique une condition dangereuse associée à l'avion.

2. Système (10) selon la revendication 1, dans lequel le sous-système d'avion (12) comprend :
un système de gestion de vol (22) ;
un système de gestion de données (26) en communication avec le système de gestion de vol ; et
un système de gestion de communication (24) en communication avec le système de gestion de données, dans lequel le système de gestion de communication sert à transmettre les données sélectionnées.

3. Système (10) selon la revendication 2, dans lequel au moins l'un du module de comparateur (42) et du module de déclenchement (44) réside à l'intérieur du système de gestion de vol (22).

4. Système (10) selon la revendication 2, dans lequel au moins l'un du module de comparateur (42) et du module de déclenchement (44) réside à l'intérieur du système de gestion de données (26).

5. Système (10) selon la revendication 2, dans lequel le système de gestion de données (26) comprend une unité d'acquisition de données de vol (38), et dans lequel au moins l'un du module de comparateur (42) et du module de déclenchement (44) réside à l'intérieur de l'unité d'acquisition de données de vol.

6. Système (10) selon la revendication 2, dans lequel au moins l'un du module de comparateur (42) et du module de déclenchement (44) réside à l'intérieur du système de gestion de communication (24).

7. Système (10) selon la revendication 2, dans lequel le système de gestion de communication (24) comprend une unité de gestion de communication (36) pour transmettre les données sélectionnées.

8. Système (10) selon la revendication 2, dans lequel le système de gestion de communication (24) comprend un système d'adressage et de rapport de communication d'avion pour transmettre les données sélectionnées.

9. Système (10) selon la revendication 1, dans lequel la liaison de communication sans fil (14) comprend l'une d'une liaison de communication VHF, d'une liaison de communication HF, et d'une liaison de communication satellitaire.

10. Système (10) selon la revendication 1, dans lequel le sous-système au sol comprend :
un émetteur récepteur (46) ; et
un serveur (50) en communication avec l'émetteur récepteur par l'intermédiaire d'une troisième liaison de communication (48), dans lequel le serveur comprend le module d'analyseur (54).

11. Système (10) selon la revendication 10, dans lequel le serveur comprend en outre le module de corrélation (56).

12. Système (10) selon la revendication 10, dans lequel l'émetteur récepteur (46) comprend une portion de la station de base.

13. Système (10) selon la revendication 10, dans lequel l'émetteur récepteur (46) comprend une portion d'une station terrestre.

14. Système (10) selon la revendication 10, dans lequel la troisième liaison de communication (48) comprend une portion du réseau téléphonique commuté public.

15. Système (10) selon la revendication 1, dans lequel le système externe (18) est l'un d'un système de contrôle aérien civil, d'un système de contrôle aérien militaire, d'un système de défense aérienne militaire, et d'un système de commande et de contrôle militaire.

16. Système (10) selon la revendication 1, dans lequel le système externe (18) comprend un serveur (58) en communication avec le sous-système au sol (16) par l'intermédiaire de la deuxième liaison de communication (20), et dans lequel le serveur comprend le module de corrélation (56).

17. Système (10) selon la revendication 16, dans lequel la deuxième liaison de communication (20) comprend une portion d'un réseau d'ordinateurs.

18. Procédé pour avertir d'une condition dangereuse associée à un avion, le procédé comprenant les étapes suivantes :
recueillir les données de vol à bord de l'avion ;
comparer les données de vol aux données prévues ;
déclencher la transmission de données sélectionnées lorsque les données de vol s'écartent des données prévues ;
analyser les données sélectionnées transmises de l'avion ; et
corréler les données sélectionnées avec les informations accessibles par un système externe,
**caractérisé par** l'étape consistant à générer un avertissement lorsque la corrélation indique une condition dangereuse associée à l'avion.

19. Procédé selon la revendication 18, dans lequel la corrélation des données sélectionnées comprend la corrélation des données sélectionnées avec les informations reçues du système externe.

20. Procédé selon la revendication 18, dans lequel la corrélation des données sélectionnées comprend la corrélation des données sélectionnées avec les informations résidant sur le système externe.
